# EUROPÄISCHE PATENTSCHRIFT

(11) **EP 4 371 392 B1**
(45) Veröffentlichungstag und Bekanntmachung des Hinweises auf die Patenterteilung: **11.11.2026**
(21) Anmeldenummer: 23197935.2
(22) Anmeldetag: 18.09.2023
(51) Int. Cl.: A01D 41/127, A01D 41/14, A01D 69/03

(54) **SELBSTFAHRENDE ERNTEMASCHINE**
SELF-PROPELLED HARVESTER
MOISSONNEUSE AUTOMOTRICE

(30) Priorität: 16.11.2022 DE 102022130291
(43) Veröffentlichungstag der Anmeldung: 22.05.2024
(73) Patentinhaber: CLAAS Selbstfahrende Erntemaschinen GmbH, 33428 Harsewinkel (DE)
(72) Erfinder: Rohde-Fölling, Marcel, 33428 Harsewinkel (DE); König, Christian, 88094 Oberteuringen (DE); Fischer, Josef, 88400 Mettenberg (DE)
(74) Vertreter: CLAAS Gruppe

(56) Entgegenhaltungen:
- EP-A1- 3 000 306
- EP-A1- 3 348 131
- DE-A1- 102017 201 701

## Beschreibung

Die vorliegende Erfindung betrifft eine selbstfahrende Erntemaschine, insbesondere Feldhäcksler, gemäß dem Oberbegriff des Anspruches 1.

Eine selbstfahrende Erntemaschine der eingangs genannten Art ist aus der DE 10 2020 111 993 A1 bekannt. Dort ist eine selbstfahrende Erntemaschine, umfassend einen Antriebsmotor sowie einen von dem Antriebsmotor angetriebenen Vorsatzantrieb, welcher zumindest eine Hydraulikpumpe aufweist, die zum Antreiben eines Hydraulikmotors zum Antreiben eines an einer Einzugsvorrichtung der Erntemaschine angeordneten Vorsatzgerätes eingerichtet ist, beschrieben. Selbstfahrende Erntemaschine, insbesondere Feldhäcksler, werden mit unterschiedlichen Vorsatzgeräten betrieben, welche sich unter anderem hinsichtlich ihres maximal zulässigen Betriebsdrehmoments voneinander unterschieden. Weitere Unterschiede zwischen verschiedenen Arten von Vorsatzgeräten können das Betreiben mit konstanter oder variabler Drehzahl und/oder ihre Antriebsdrehrichtung sein.

Eine selbstfahrende Erntemaschine ist auch aus der EP 3 000 306 A1 bekannt. Diese schlägt vor, für den Antrieb unterschiedlicher Arten/Größen von Erntevorsätzen eine Mehrzahl von Antriebsmitteln vorzusehen. Die Summation der Antriebsleistungen der unterschieldlichen Antriebsmittel ermöglicht dann ein flexibles und effizientes Antriebskonzept auch für unterschiedliche Erntevorsätze. Beispielsweise schlägt die Druckschrift vor, einen hydrostatischen Antrieb mit einem Hydraulikmotor und einer variablen Hydraulikpumpe als erstes Antriebsmittel vorzusehen und gegebenenfalls ein zweites Antriebsmittel hinzuzuschalten, dass entweder als hydrostatischer Antrieb oder mechanischer Antrieb ausgestaltet ist.

Weitere selbstfahrende Erntemaschinen sind aus der DE 10 2017 201701 A1 und der EP 3 348 131 A1 bekannt.

Da die verschiedenen Arten von Vorsatzgeräten mit unterschiedlichen maximal zulässigen Drehmomenten zu betreiben sind, ist es erforderlich und üblich, jedes Vorsatzgerät mit seiner eigenen Überlastkupplung sowie einem Getriebe zum Begrenzen und Einstellen des zulässigen Drehmoments und der erforderlichen Drehzahl auszustatten.

Der Erfindung liegt somit die Aufgabe zugrunde, eine selbstfahrende Erntemaschine der eingangs genannten Art weiterzubilden, welche einen auf die unterschiedlichen Erfordernisse verschiedener Arten von Vorsatzgeräten abgestimmten Betrieb ermöglicht.

Diese Aufgabe wird erfindungsgemäß durch eine selbstfahrende Erntemaschine mit den Merkmalen des Anspruches 1 gelöst. Vorteilhafte Weiterbildungen sind Gegenstand der hiervon abhängigen Ansprüche.

Somit lässt sich der Vorsatzantrieb in einem effizienten Betriebspunkt des Hydraulikmotors betreiben, jedoch lässt sich die zur Verfügung stehende Leistungsreserve, die Differenz zwischen dem Betriebsdrehmoment und dem vorsatzgerätespezifischen Maximaldrehmoment mit Priorität für einen stabilen Gutfluss zu jeder Zeit abrufen.

Insbesondere kann die Steuerungsvorrichtung dazu eingerichtet sein, den Hydraulikmotor in einem Effizienzmodus zu betreiben, wobei die Steuerungsvorrichtung den im Effizienzmodus voreingestellten Schwenkwinkel des Hydraulikmotors nach einem Lastkollektiv in Abhängigkeit von der Art des angebauten Vorsatzgerätes und einer für das Vorsatzgerät spezifischen Betriebsdrehzahl bestimmt. Im Effizienzmodus kann der Hydraulikmotor, in Abhängigkeit vom anzutreibenden Vorsatzgerät, in einem effizienten Betriebspunkt betrieben werden.

Erfindungsgemäß sind die Hydraulikpumpe und der Hydraulikmotor in einem geschlossen ausgeführten Hydraulikkreislauf angeordnet, wobei die Hydraulikpumpe und der Hydraulikmotor durch zwei Hydraulikleitungen fluidleitend miteinander verbunden sind, wobei in beiden Hydraulikleitungen jeweils ein Drucksensor der Hydraulikpumpe nachgeordnet ist, welche von diesen generierte Messsignale an die Steuerungsvorrichtung zur Auswertung übertragen. Dies dient dazu, die Ansteuerung des Hydraulikmotors an wechselnde Lastanforderungen anzupassen. So kann bei einer kurzfristig erhöhten Lastanforderung das Schluckvolumen des Hydraulikmotors vergrößert werden, um das vom Hydraulikmotor bereitgestellte Betriebsdrehmoment zu erhöhen. Hierzu kann die Steuerungsvorrichtung den Hydraulikmotor in einem Boost-Modus betreiben.

Insbesondere kann die Steuerungsvorrichtung dazu eingerichtet sein, das Schluckvolumen oder den Schwenkwinkel des Hydraulikmotors vorsatzgerätespezifisch einzustellen. Dadurch ist die Möglichkeit gegeben, vorsatzgerätespezifisch für das jeweilige an die Einzugsvorrichtung angekoppelte Vorsatzgerät das von dem Hydraulikmotor maximal bereitgestellte Drehmoment zu begrenzen. Durch diese Drehmomentbegrenzung wird eine Überlastung vermieden. Dabei kann im Boost-Modus die Drehmomentbegrenzung übersteuert werden.

Gemäß einer Weiterbildung kann die Steuerungsvorrichtung dazu eingerichtet sein, einen Steuerstrom zur Einstellung des Schwenkwinkels des Hydraulikmotors einzustellen und zu überwachen. Vorteilhaft daran ist, dass keine zusätzlichen Komponenten im Hydraulikkreislauf erforderlich sind, um den Schwenkwinkel des Hydraulikmotors einzustellen bzw. zu verstellen.

Des Weiteren kann in beiden Hydraulikleitungen jeweils ein Druckbegrenzungsventil der Hydraulikpumpe nachgeordnet sein, wobei die beiden Druckbegrenzungsventile baugleich ausgeführt sind. Insbesondere sind die Druckbegrenzungsventile als vorgesteuerte Druckbegrenzungsventils ausgeführt. Der geschlossen ausgeführte Hydraulikkreislauf mit Hydraulikpumpe und Hydraulikmotor lässt sich in seinem maximalen Drehmoment über das Schluckvolumen bzw. den Schwenkwinkel begrenzen. Die Anordnung der beiden baugleichen Druckbegrenzungsventile in den Hydraulikleitungen ermöglicht es, dass im Einziehbetrieb und im Reversierbetrieb das vom Hydraulikmotor bereitgestellte maximale Drehmoment in beiden Drehrichtungen auf den gleichen Wert oder auf voneinander abweichende Werte eingestellt werden kann. Somit kann für die jeweilige Art von Vorsatzgerät durch die Einstellung des Schluckvolumens oder des Schwenkwinkels des Hydraulikmotors das maximal zulässige Drehmoment durch die Steuerungsvorrichtung drehrichtungsunabhängig vorgegeben werden.

Insbesondere kann die Steuerungsvorrichtung eine Recheneinheit, eine Speichereinheit sowie eine Bedien- und Anzeigeeinheit umfassen, wobei die Recheneinheit dazu eingerichtet ist, in der Speichereinheit hinterlegte Informationen zu verarbeiten. Die Bedien- und Anzeigeeinheit ist zur Eingabe und/oder manuellen oder automatisierten Auswahl eines an der Einzugsvorrichtung angeordneten Vorsatzgerätes eingerichtet. Mittels der Bedien- und Anzeigeeinheit kann eine Bedienperson der Erntemaschine das entsprechende Vorsatzgerätemodell auswählen, sodass der in der Speichereinheit hinterlegte vorsatzgerätespezifische Parametersatz zur Verarbeitung durch die Recheneinheit zur Verfügung steht. Ebenfalls denkbar ist eine automatische Erkennung des angebauten Vorsatzgerätes durch die Steuerungsvorrichtung oder alternativ durch eine weitere Steuereinheit der Erntemaschine.

Dabei können in der Speichereinheit vorsatzgerätespezifisch zumindest ein Minimalwert und zumindest ein Maximalwert für einen im Hydraulikkreislauf detektieren Lastdruck hinterlegt sein. Der vorsatzgerätespezifische Minimalwert und der Maximalwert bilden einen Übergangsbereich aus, um zwischen den Betriebsarten Effizienzmodus und Boost-Modus zu wechseln.

Insbesondere kann die Steuerungsvorrichtung dazu eingerichtet sein, beim Überschreiten des Maximalwertes für den Lastdruck ein von dem Hydraulikmotor aufgenommenes Schluckvolumen durch die Verstellung des Schwenkwinkels zu vergrößern. Hierzu kann die Steuerungsvorrichtung den Hydraulikmotor temporär im Boost-Modus betreiben.

Des Weiteren kann die Steuerungsvorrichtung dazu eingerichtet sein, beim Unterschreiten des Minimalwertes für den Lastdruck das von dem Hydraulikmotor aufgenommene Schluckvolumen durch die Verstellung des Schwenkwinkels zu reduzieren, so dass der Hydraulikmotor das für die Betriebsart Effizienzmodus voreingestellte vorsatzgerätespezifische Betriebsdrehmoment generiert.

Gemäß einer vorteilhaften Weiterbildung kann die Steuerungsvorrichtung dazu eingerichtet sein, in Abhängigkeit von einer Mindestdauer der Überschreitung des Maximalwertes oder der Unterschreitung des Minimalwertes den Hydraulikmotor zur Veränderung des aufgenommenen Schluckvolumens anzusteuern.

Insbesondere kann die Steuerungsvorrichtung das vorsatzgerätespezifische Betriebsdrehmoment mittels in der Speichereinheit hinterlegten Kennlinien oder Kennlinienfeldern bestimmen. Hierzu können Wirkungsgradkennfelder von Herstellern des Hydraulikmotors und Lastdaten aus Dauerlaufversuchen zählen.

Bevorzugt kann die Steuerungsvorrichtung dazu eingerichtet sein, zum Betreiben des Vorsatzgerätes eine vom Hydraulikmotor angetriebene, als Schnellkuppeleinrichtung ausgeführte Kuppeleinrichtung, mit der das Vorsatzgerät zum Antreiben trieblich verbunden ist, mit einer konstanten Drehzahl zu betreiben und die Drehzahl der Kuppelvorrichtung durch eine von der Antriebsdrehzahl des Antriebsmotors und der Vorfahrtgeschwindigkeit unabhängigen Ansteuerung der Hydraulikpumpe des Vorsatzantriebs im Wesentlichen konstant zu halten. Während der Hydraulikmotor mit dem voreingestellten Schwenkwinkel betrieben wird, wird die Drehzahl der Kuppeleinrichtung durch die Ansteuerung der Hydraulikpumpe bewirkt. Die Drehzahl der Kuppeleinrichtung kann in den technischen Grenzen unabhängig von der Antriebsmotordrehzahl und der Vorfahrtgeschwindigkeit im Wesentlichen konstant gehalten werden. Wesentlich ist dabei, dass durch diese Ansteuerung einer Motordrückung eines als Verbrennungsmotor ausgeführten Antriebsmotors entgegengewirkt werden kann, um die Drehzahl der Kuppeleinrichtung im Wesentlichen konstant zu halten. Dadurch kann der Betrieb von Vorsatzgeräten mit angetriebenen Komponenten, die mit einer konstanten Drehzahl zu betreiben sind, gewährleistet werden.

Hierdurch lässt sich beispielsweise bei einem Direktschneidwerk durch eine im Wesentlichen konstant gehaltene Mähscheibendrehzahl das Schnittbild verbessern. Durch die elektrische Steuerung des Schwenkwinkels des Hydraulikmotors wirkt die hydrostatische Übersetzung zwischen der Hydraulikpumpe und dem Hydraulikmotor der Motordrückung entgegen um die Drehzahl der Kuppeleinrichtung konstant zu halten.

Die vorliegende Erfindung wird nachstehend anhand eines in den Zeichnungen dargestellten Ausführungsbeispieles näher erläutert.

Es zeigen:
- Fig. 1: eine schematische Ansicht einer selbstfahrenden Erntemaschine mit Vorsatzgerät;
- Fig. 2: exemplarisch und schematisch eine perspektivische Ansicht eines Antriebssystems des Feldhäckslers;
- Fig. 3: exemplarisch ein vereinfachtes Schaltbild eines Hydraulikreislaufs eines dem Antrieb des Vorsatzgerätes dienenden Antriebsstrangs; und
- Fig. 4: ein Schwenkwinkel-Drehzahldiagramm.

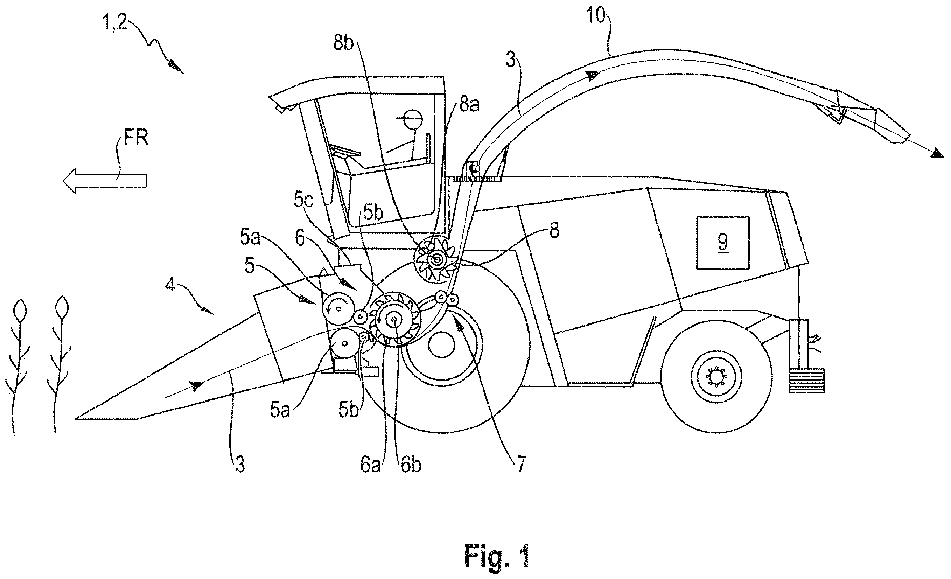

In Fig. 1 ist eine schematische Ansicht einer als Feldhäcksler 2 ausgeführten selbstfahrenden Erntemaschine 1 dargestellt. Die Erntemaschine 1 erntet beziehungsweise nimmt mittels eines Vorsatzgerätes 4 Erntegut vom Feld auf, um anschließend das aufgenommene Erntegut in Form eines Erntegutstroms 3 (in Fig. 1 als mit Pfeilen versehene Linie angedeutet) nachgeordneten Arbeitsorganen, die als Bearbeitungs- und Förderorgane der Erntemaschine 1 ausgeführt sind, zuzuführen und mittels einer Überladeeinrichtung in einen - nicht dargestellten - Ladebehälter abzuwerfen. Die Bearbeitungs- und Förderorgane der als Feldhäcksler 2 ausgeführten Erntemaschine 1 umfassen unter anderem eine Einzugsvorrichtung 5, eine Häckselvorrichtung 6, eine optionale Konditioniereinrichtung 7 sowie einen Auswurfbeschleuniger 8. Mit dem Pfeil FR ist die Fahrtrichtung bezeichnet.

Die Einzugsvorrichtung 5 besteht aus mehreren in einem Einzugsgehäuse 5c hintereinander angeordneten angetriebenen Walzenpaaren 5a, 5b. Das Vorsatzgerät 4 ist an die Einzugsvorrichtung 5 ankoppelbar. Die Häckselvorrichtung 6 umfasst eine rotierende, mit Messern ausgestatteten Messertrommel 6a mittels der das aufgenommene Erntegut in Zusammenwirkung mit einer Gegenschneide zerkleinert wird. Die Messertrommel 6a ist auf einer angetriebenen Messertrommelwelle 6b angeordnet. Der Häckselvorrichtung 6 ist in einem Förderschacht in Gutstromförderrichtung nachgelagert die optionale Konditioniereinrichtung 7 angeordnet, die bei Bedarf aus dem Erntegutstrom 3 entfernbar ist. Der Konditioniereinrichtung 7 im Förderschacht ist in Gutstromförderrichtung der Auswurfbeschleuniger 8 nachgelagert, welcher das Erntegut mittels rotierender Wurfpaddel für den sicheren Auswurf durch die als Auswurfkrümmer ausgeführte Überladeeinrichtung 10 beschleunigt. Der Auswurfbeschleuniger 8 umfasst auf einer Welle 8b drehfest angeordnete Förderelemente 8a. Im rückwärtigen Bereich des Feldhäckslers 2 ist ein als Verbrennungsmotor ausgeführter Antriebsmotor 9 als Hauptantriebsaggregat angeordnet.

Als an die Einzugsvorrichtung 5 ankoppelbare Vorsatzgerät 4 kommen unterschiedliche Arten von Vorsatzgeräten zum Einsatz, die in Abhängigkeit von der zu verarbeitenden Erntegutart ausgewählt werden. Beispielsweise wird zur Aufnahme von in Schwaden abgelegtem Erntegut eine so genannte Pick-up am Feldhäcksler 2 verwendet. Für das Ernten von Ganzpflanzen kommt hingegen ein Scheibenmähwerk zum Einsatz. Beim Ernten von Mais wird ein reihenunabhängig arbeitendes Maisgebiss oder ein reihenabhängig arbeitender Maispflücker an die Einzugsvorrichtung 5 des Feldhäckslers 2 angekoppelt.

Die vorgenannten, nicht abschließend aufgezählten, Arten von Vorsatzgeräten 4 unterscheiden sich hinsichtlich ihres Antriebes durch unterschiedliche Betriebsspezifikationen. So bedürfen beispielsweise das Maisgebiss oder die Pick-up einer variablen Antriebsdrehzahl, während das Scheibenmähwerk mit einer konstanten Antriebsdrehzahl arbeitet. Des Weiteren ist die Leistungsaufnahme des Scheibenmähwerkes höher als die der Pick-up oder des Maisgebisses. Entsprechend variieren die Anforderungen an einen hierfür vorgesehenen Antrieb.

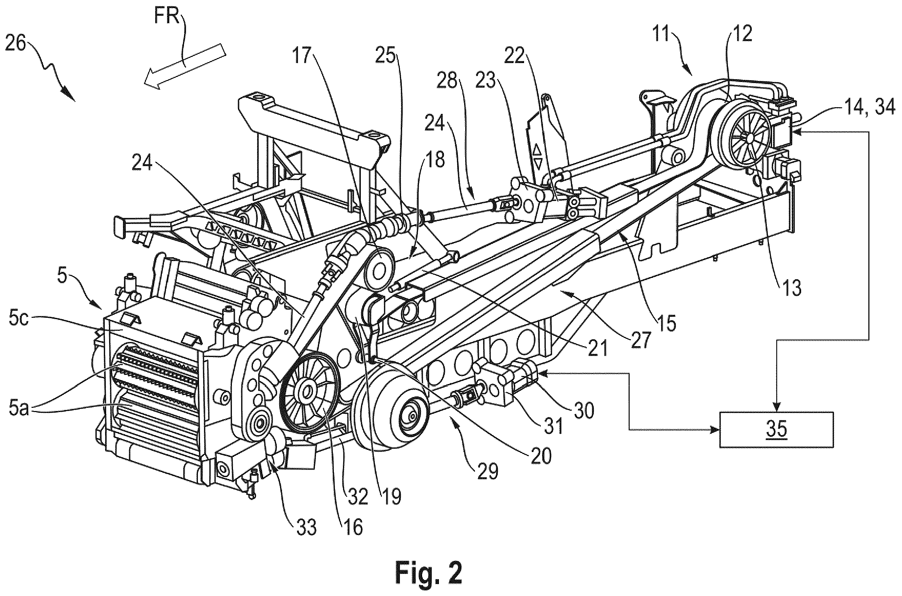

In Fig. 2 ist exemplarisch und schematisch eine perspektivische Ansicht eines Antriebssystems 26 des Feldhäckslers 2 dargestellt. Die schematische Darstellung zeigt insbesondere die Komponenten des Antriebssystems 26, welche der Kraftübertragung zu dem angebauten Vorsatzgerät 4 sowie der Einzugsvorrichtung 5 dienen.

Der Antriebsmotor 9 treibt über eine - nicht dargestellte - Motorwelle ein auf der linken Maschinenseite angeordnetes Verteilergetriebe 11 an. Das Verteilergetriebe 11 umfasst eine auf einer ersten Antriebswelle angeordnete Abtriebsriemenscheibe 12, welche durch eine hydraulisch betätigbare Kupplung 13 mit der Motorwelle des Antriebsmotors 9 schaltbar verbunden ist. Weiterhin ist an einer zweiten Antriebswelle des Verteilergetriebes 11 zumindest eine Hydraulikpumpe 14 unmittelbar an das Verteilergetriebe 11 angeschlossen.

Durch die Abtriebsriemenscheibe 12 wird mittels eines Hauptantriebsriemens 15 zumindest eine endseitig auf der Messertrommelwelle 6b angeordnete Hauptriemenscheibe 16 angetrieben. Der Hauptantriebsriemen 15 treibt über eine an einer Welle angeordnete Riemenscheibe 17 den Auswurfbeschleuniger 8 an. Die Oberseite des Hauptantriebsriemens 15 wird durch eine Spannvorrichtung 18, die eine um eine Achse 20 schwenkbare Spannrolle 19 sowie einen Hydraulikzylinder 21 umfasst, mit einer einstellbaren Spannung beaufschlagt. Die Abtriebsriemenscheibe 12, der Hauptantriebsriemen 15 und die Hauptriemenscheibe 16 bilden einen Hauptantriebsstrang 27 zum Antreiben der Messertrommel 6a, der Konditioniereinrichtung 7 sowie des Auswurfbeschleunigers 8.

Weiterhin ist ein Hydraulikmotor 22 vorgesehen, welcher oberhalb des Hauptantriebsriemens 15 angeordnet ist. Der Hydraulikmotor 22 wird von der zumindest einen Hydraulikpumpe 14 angetrieben. Eine Antriebswelle des Hydraulikmotors 22 treibt ein Getriebe 23 an, welches über Gelenkwellen 24 mit der anzutreibenden Einzugsvorrichtung 5 verbunden ist. Zwischen den Gelenkwellen 24 kann zusätzlich ein weiteres Getriebe 25 angeordnet sein. Die Hydraulikpumpe 14, der Hydraulikmotor 22 sowie das sich daran anschließende Getriebe 23 und die Gelenkwellen 24 bilden einen separaten Antriebsstrang 28 zum Antreiben der Einzugsvorrichtung 5.

Zum Antreiben des Vorsatzgerätes 4 ist ein weiterer separater Antriebsstrang, als Vorsatzantrieb 29 bezeichnet, vorgesehen. Der Vorsatzantrieb 29 kann unterhalb des Haupantriebstriemens 15 angeordnet sein. Der Vorsatzantrieb 29 umfasst zumindest eine Hydraulikpumpe 34, die einen Hydraulikmotor 30 antreibt. Weiterhin kann der Vorsatzantrieb 29 ein an eine Abtriebswelle des Hydraulikmotors 30 angeschlossenes Getriebe 31 aufweisen sowie zumindest eine Gelenkwelle 32, welche mit einer Kuppeleinrichtung 33 für den Antrieb des an der Einzugsvorrichtung 5 angeordneten Vorsatzgerätes 4 trieblich verbunden ist. Die Kuppeleinrichtung 33 ist hier und vorzugsweise als eine Schnellkuppeleinrichtung ausgeführt. Der Hydraulikmotor 30 wird von der zumindest einen Hydraulikpumpe 34 gespeist. Die zumindest eine Hydraulikpumpe 34 des Vorsatzantriebes 29 ist zum Antreiben ebenfalls, insbesondere unmittelbar, an das Verteilergetriebe 11 angeschlossen.

Der Antriebsstrang 28 zum Antreiben der Einzugsvorrichtung 5 und der Vorsatzantrieb 29 zum Antreiben des Vorsatzgerätes 4 sind unabhängig voneinander betreibbar und ansteuerbar.

Der Hydraulikmotor 30 ist als Verstellmotor ausgeführt. Die Hydraulikpumpe 34 ist als Verstellpumpe ausgeführt. Zur Ansteuerung des Hydraulikmotors 30 und der diesen antreibenden Hydraulikpumpe 34 ist eine Steuerungsvorrichtung 35 vorgesehen. Die Steuerungsvorrichtung 35 ist dazu eingerichtet, ein vom Hydraulikmotor 30 aufgenommenes maximales Schluckvolumen vorzugeben. Die Vorgabe des durch den Hydraulikmotor 30 aufgenommenen maximalen Schluckvolumens erfolgt in Abhängigkeit von der Art des Vorsatzgerätes 4, welches von der Einzugsvorrichtung 5 aufgenommen ist. Somit lässt sich für unterschiedliche Arten von am Feldhäcksler 2 zum Einsatz kommenden Vorsatzgeräten 4, beispielsweise Pick-up, Maisgebiss oder Direktschneidwerk, das an der Kuppeleinrichtung 33 bereitgestellte maximale Drehmoment vorsatzgerätespezifisch einstellen bzw. begrenzen.

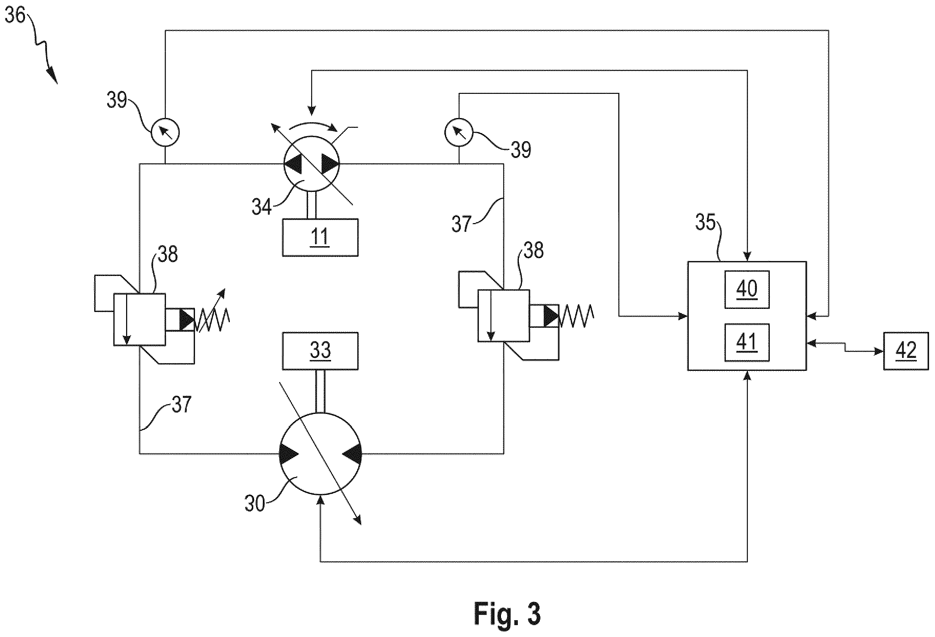

Die Darstellung in Fig. 3 zeigt exemplarisch ein stark vereinfachtes Schaltbild eines Hydraulikreislaufs 36 des dem Antrieb des Vorsatzgerätes 4 dienenden Vorsatzantriebs 29. Der Hydraulikmotor 30 und die Hydraulikpumpe 34 sind in dem geschlossen ausgeführten Hydraulikkreislauf 36 angeordnet. In beiden Hydraulikleitungen 37, welche den Hydraulikmotor 30 und die Hydraulikpumpe 34 miteinander fluidleitend verbinden, können Druckbegrenzungsventile 38 angeordnet sein.

Die vorsatzgerätespezifische Vorgabe des Schluckvolumens des Hydraulikmotors 30 durch die Steuerungsvorrichtung 35 ermöglicht es, für das Einziehen des Erntegutes durch das Vorsatzgerät 4 ein anderes Drehmoment einzustellen als für das Reversieren. Die Steuerungsvorrichtung 35 ist dazu eingerichtet, vorsatzgerätespezifisch das Schluckvolumen beim Einziehen auf einen ersten Wert einzustellen bzw. zu begrenzen und beim Reversieren auf einen zweiten Wert, der vom ersten Wert abweichen kann.

Die Steuerungsvorrichtung 35 umfasst eine Recheneinheit 40, eine Speichereinheit 41 sowie eine Bedien- und Anzeigeeinheit 42. Die Recheneinheit 40 ist dazu eingerichtet, in der Speichereinheit 41 hinterlegte Informationen zu verarbeiten. Die Bedien- und Anzeigeeinheit ist zur Eingabe und/oder manuellen oder automatisierten Auswahl des jeweiligen an der Einzugsvorrichtung 5 angeordneten Vorsatzgerätes 4 eingerichtet. In der Speichereinheit 41 können für die verschiedenen Arten und Modelle von Vorsatzgeräten 4 vorsatzgerätespezifische Parametersätze hinterlegt sein. Die vorsatzgerätespezifischen Parametersätze beinhalten unter anderem Maximalwerte für Drehmomente im Einziehbetrieb und im Reversierbetrieb der verschiedenen Vorsatzgerätearten und -modelle.

Alternativ zur manuellen Eingabe oder Auswahl des an der Einzugsvorrichtung 5 angeordneten Vorsatzgerätes 4 ist es denkbar, dass eine automatische Vorsatzgeräteerkennung vorgesehen ist, um Art und Typ des angekoppelten Vorsatzgerätes 4 zu bestimmen.

Der jeweilige für das angebaute Vorsatzgerät 4 spezifische Parametersatz wird entsprechend der Eingabe oder der Auswahl durch eine Bedienperson zur Ansteuerung des Hydraulikmotors 30 herangezogen, um Schluckvolumen oder Schwenkwinkel SW des Hydraulikmotors 30 zur Begrenzung des auf das Vorsatzgerät 4 zu übertragenden Drehmoments einzustellen.

Weiterhin kann die Bedien- und Anzeigeeinheit 42 zur manuellen Eingabe von Maximalwerten für Drehmomente im Einziehbetrieb und im Reversierbetrieb des Vorsatzgerätes 4 eingerichtet sein.

Die Steuerungsvorrichtung 35 ist zur Begrenzung des auf das Vorsatzgerät 4 zu übertragenden Drehmoments dazu eingerichtet, einen Steuerstrom zur Einstellung des Schwenkwinkels SW des Hydraulikmotors 30 einzustellen und zu überwachen. Hierzu wird der Steuerstrom durch eine Sensoranordnung erfasst und die von der Sensoranordnung generierten Messsignale an die Steuerungsvorrichtung 35 zur Auswertung übertragen.

Die Druckbegrenzungsventile 38 sind der Hydraulikpumpe 34 nachgeordnet angeordnet. Die beiden Druckbegrenzungsventile 38 sind baugleich ausgeführt, so dass das maximale vorsatzgerätespezifische Drehmoment, welches an der Kuppeleinrichtung 33 bereitgestellt wird, drehrichtungsunabhängig gleich ist. Baugleich heißt in diesem Fall, dass die beiden Druckbegrenzungsventile 38 identische Spezifikationen aufweisen. Den Hydraulikleitungen 37 ist jeweils ein Drucksensor 39 zugeordnet, welche von diesen generierte Messsignale an die Steuerungsvorrichtung 35 zur Auswertung übertragen.

Die Anordnung der beiden baugleichen Druckbegrenzungsventile 38 im Hydraulikkreis 36 ermöglicht es zudem, den Hydraulikmotor 30 in beide Drehrichtungen, d.h. im Einziehbetrieb und im Reversierbetrieb, bei voller Leistungsfähigkeit zu betreiben.

Die Steuerungsvorrichtung 35 ist weiter dazu eingerichtet, im Einziehbetrieb und im Reversierbetrieb für das Schluckvolumen oder den Schwenkwinkel SW gleiche Einstellwerte oder voneinander abweichende Einstellwerte vorzugeben und einzustellen. In Verbindung mit den beiden baugleichen Druckbegrenzungsventilen 38 ermöglicht dies eine Abstimmung an die Anforderungen der unterschiedlichen Vorsatzgeräte 4, wodurch eine Überlastung der Komponenten des jeweiligen Vorsatzgerätes 4 sowie des Vorsatzantriebs 29 vermieden werden.

Der Vorsatzantrieb 29 ist zum linksdrehenden und zum rechtsdrehenden Antreiben des Vorsatzgerätes 4 in einem Einziehbetrieb vorgesehen und eingerichtet.

Die Drehrichtung an der Kuppeleinrichtung 33 kann durch eine invertierte Ansteuerung der Hydraulikpumpe 34 richtungsvertauscht werden. Die invertierte Ansteuerung der Hydraulikpumpe 34 erfolgt vorzugsweise ebenfalls durch die Steuerungsvorrichtung 35. Bei der invertierten Ansteuerung steuert die Steuerungseinrichtung 35 die Hydraulikpumpe 34 derart an, sodass sich die Drehrichtung des Vorsatzantriebs 29 von linksdrehend zu rechtsdrehend oder umgekehrt ändert. In beide Drehrichtungen sind die gleichen maximalen Drehzahlen einstellbar, somit sind sowohl Vorsatzgeräte 4 mit einer linksseitigen Drehrichtung für den Einziehbetrieb als auch Vorsatzgeräte 4 mit einer rechtsseitigen Drehrichtung für den Einziehbetrieb ohne zusätzliche Wechselgetriebe oder zumindest mit einer verringerten Anzahl von Wechselgetrieben mit dem Vorsatzantrieb 29 der Erntemaschine 1 koppelbar.

In Verbindung mit den beiden baugleichen Druckbegrenzungsventilen 38 im geschlossenen Hydraulikkreislauf 36 steht an der Kuppeleinrichtung 33 drehrichtungsunabhängig das jeweilig eingestellte Drehmoment für den Einziehbetrieb und den Reversierbetrieb zur Verfügung.

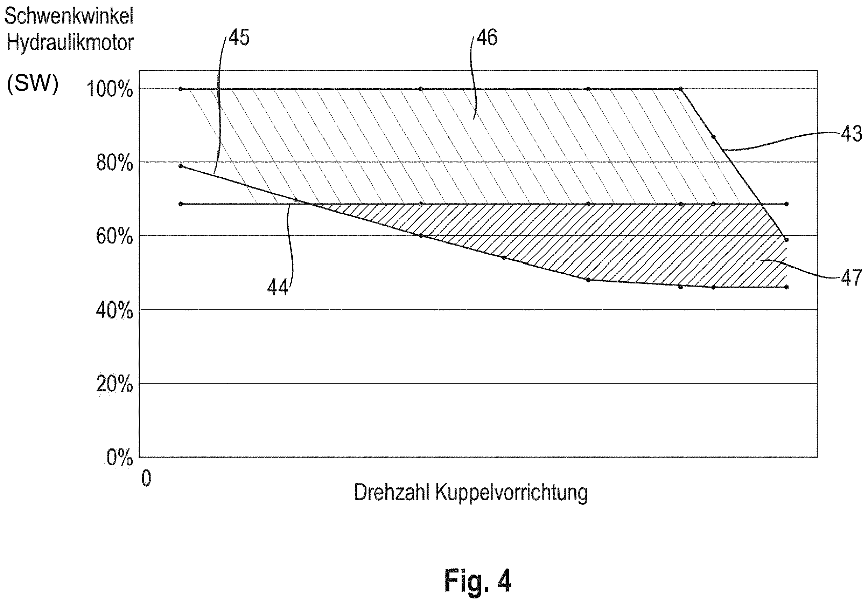

In Fig. 4 ist ein Schwenkwinkel-Drehzahldiagramm mit verschiedenen Drehmomentverläufen 43, 44, 45 für den Hydraulikmotor 30 und das Vorsatzgerät 4 dargestellt. Mit 43 ist ein Grenz-Drehmomentverlauf des Hydraulikmotors 30 bezeichnet, welcher dessen technische Obergrenze, das von dem Hydraulikmotor 30 maximal zur Verfügung stellbare Drehmoment, darstellt. Mit 44 ist ein Drehmomentverlauf des anzutreibenden Vorsatzgerätes 4 bezeichnet, das sich vorsatzgerätespezifisch aus dem maximal aufnehmbaren Drehmoment des Vorsatzgerätes 4 ergibt. Mit 45 ist ein Effizienz-Drehmomentverlauf des Hydraulikmotors 30 bezeichnet, welcher sich für verschiedene Lastpunkte des Vorsatzgerätes 4 einstellt, in welchen der Hydraulikmotor 30 effizient betreibbar ist.

Die Steuerungsvorrichtung 35 ist dazu eingerichtet, den Hydraulikmotor 30 in einem Effizienzmodus zu betreiben, wobei die Steuerungsvorrichtung 35 den im Effizienzmodus voreingestellten Schwenkwinkel SW des Hydraulikmotors 30 nach einem Lastkollektiv in Abhängigkeit von der Art des angebauten Vorsatzgerätes 4 und einer für das Vorsatzgerät 4 spezifischen Betriebsdrehzahl bestimmt. Im Effizienzmodus kann der Hydraulikmotor 30, in Abhängigkeit vom anzutreibenden Vorsatzgerät, in einem effizienten Betriebspunkt betrieben werden. Der effiziente Betriebspunkt kann anhand des Effizienz-Drehmomentverlaufs 45 des Hydraulikmotors 30 bestimmt werden.

Ein zwischen dem Grenz-Drehmomentverlauf 43 des Hydraulikmotors 30 und dem Drehmomentverlauf 44 des Vorsatzgerätes 4 durch Schraffur 46 gekennzeichneter Bereich definiert den Betriebsbereich des Hydraulikmotors 30, innerhalb dessen dieser aufgrund des Grenz-Drehmomentverlaufs 44 des anzutreibenden Vorsatzgerätes 4 nicht betreibbar ist. Die Einhaltung des Grenz-Drehmomentverlaufs 44 wird durch die Ansteuerung und Einstellung der beiden baugleichen Druckbegrenzungsventile 38 erreicht.

Ein zwischen dem Grenz-Drehmomentverlauf 44 des Vorsatzgerätes 4 und dem Effizienz-Drehmomentverlauf 45 des Hydraulikmotors 30 durch Schraffur 47 gekennzeichneter Bereich definiert einen zulässigen Betriebsbereich des Hydraulikmotors 30, in welchem durch eine Verstellung des Schwenkwinkels SW eine Übersteuerung des Effizienz-Drehmomentverlauf 45 mittels Ansteuerung durch die Steuerungsvorrichtung 35 zulässig ist.

Wie weiter oben bereits ausgeführt, ist die Steuerungsvorrichtung 35 dazu eingerichtet, den Hydraulikmotor 30 zur Einstellung des Schluckvolumens oder des Schwenkwinkels SW zur Begrenzung eines auf das Vorsatzgerät 4 zu übertragenden Drehmoments anzusteuern. Hierzu kann der einzustellende Schwenkwinkel SW anhand des für das jeweilige Vorsatzgerät 4 spezifischen Effizienz-Drehmomentverlaufs 45 bestimmt werden. Die Steuerungsvorrichtung 35 stellt den entsprechenden Steuerstrom ein, um den aus dem Effizienz-Drehmomentverlauf 45 abgeleiteten Schwenkwinkel SW für den Betrieb im Effizienzmodus einzustellen.

Die Steuerungsvorrichtung 35 ist somit dazu eingerichtet, den Hydraulikmotor 30 in Abhängigkeit von einem in der Steuerungsvorrichtung 35 hinterlegten vorsatzgerätespezifischen Parametersatz anzusteuern, so dass der Hydraulikmotor 30 im Effizienzmodus ein vorsatzgerätespezifisches Betriebsdrehmoment generiert, welches geringer als ein für das anzutreibende Vorsatzgerät 4 spezifisches Maximaldrehmoment ist. Das vorsatzgerätespezifische Maximaldrehmoment lässt sich von der Steuerungsvorrichtung 35 entsprechend aus dem Grenz-Drehmomentverlauf 44 des Vorsatzgerätes 4 zu bestimmen. Das vorsatzgerätespezifische Betriebsdrehmoment lässt sich von der Steuerungsvorrichtung 35 entsprechend aus dem Effizienz-Drehmomentverlauf 45 des Vorsatzgerätes 4 bestimmen.

Weiterhin ist die Steuerungsvorrichtung 35 dazu eingerichtet, beim Detektieren einer Lastspitze den Hydraulikmotor 30 anzusteuern, so dass der Hydraulikmotor 30 das generierte Betriebsdrehmoment bis zum Maximaldrehmoment erhöht. Hierdurch kann auf kurzfristig erhöhte Lastanforderungen des Vorsatzgerätes 4 reagiert werden. Dies kann dazu dienen, die Ansteuerung des Hydraulikmotors 30 an wechselnde Lastanforderungen anzupassen. So kann bei einer kurzfristig erhöhten Lastanforderung das Schluckvolumen des Hydraulikmotors 30 vergrößert werden, um das vom Hydraulikmotor 30 bereitgestellte Betriebsdrehmoment zu erhöhen. Hierzu kann die Steuerungsvorrichtung 35 den Hydraulikmotor 30 in einem Boost-Modus betreiben.

Zur Detektion vom Lastspitzen dient der in beiden Hydraulikleitungen jeweils der Hydraulikpumpe nachgeordnete Drucksensor, welche die von diesen generierten Messsignale an die Steuerungsvorrichtung zur Auswertung übertragen. In der Speichereinheit 41 sind vorsatzgerätespezifisch jeweils ein Minimalwert und ein Maximalwert für einen detektieren Lastdruck im Hydraulikkreislauf 36 hinterlegt. Der detektierte Lastdruck wird mit den jeweilig hinterlegten Minimalwerten und Maximalwerten durch die Recheneinheit 40 der Steuerungsvorrichtung 35 verglichen.

Die Steuerungsvorrichtung 35 ist dazu eingerichtet, beim Überschreiten des Maximalwertes für den detektierten Lastdruck ein von dem Hydraulikmotor 30 aufgenommenes Schluckvolumen durch Verstellung des Schwenkwinkels SW zu vergrößern. Die Verstellung des Schwenkwinkels SW erfolgt entsprechend bis zum Erreichen des Grenz-Drehmomentverlauf 44 des Vorsatzgerätes 4. Die Verstellung des Schwenkwinkels SW kann dabei bevorzugt stufenweise erfolgen. Denkbar ist auch eine stufenlose Verstellung des Schwenkwinkels SW.

Bei einem Unterschreiten des Minimalwertes steuert die Steuerungsvorrichtung 35 den Hydraulikmotor 30 an, um das von dem Hydraulikmotor 35 aufgenommene Schluckvolumen durch Verstellung des Schwenkwinkels SW auf einen Wert zu reduzieren, so dass der Hydraulikmotor 30 auf das eingestellte vorsatzgerätespezifische Betriebsdrehmoment, welches entsprechend dem für das Vorsatzgerät bestimmten Effizienz-Drehmomentverlauf 45 generiert wird.

Hierzu kann die Steuerungsvorrichtung 35 dazu eingerichtet sein, in Abhängigkeit von einer Mindestdauer der Überschreitung des Maximalwertes oder der Unterschreitung des Minimalwertes den Hydraulikmotor 30 zur Veränderung des aufgenommenen Schluckvolumens anzusteuern. Hierdurch lässt sich ein ungewolltes Aufschwingen des Systems durch vermeiden.

Dabei können in der Speichereinheit 41 vorsatzgerätespezifisch zumindest ein Minimalwert und zumindest ein Maximalwert für einen im Hydraulikkreislauf 36 detektieren Lastdruck hinterlegt sein. Der vorsatzgerätespezifische Minimalwert und der Maximalwert bilden einen Übergangsbereich, um zwischen den Betriebsarten Effizienzmodus und Boost-Modus zu wechseln.

Gemäß einem weiteren Aspekt ist die Steuerungsvorrichtung 35 dazu eingerichtet, zum Betreiben des Vorsatzgerätes 4 die vom Hydraulikmotor 30 angetriebene, als Schnellkuppeleinrichtung ausgeführte Kuppeleinrichtung 33, mit der das Vorsatzgerät 4 zum Antreiben trieblich verbunden ist, mit einer konstanten Drehzahl zu betreiben und die Drehzahl der Kuppelvorrichtung 33 durch eine von der Antriebsdrehzahl des Antriebsmotors 9 und der Vorfahrtgeschwindigkeit unabhängigen Ansteuerung der Hydraulikpumpe 30 des Vorsatzantriebs 29 im Wesentlichen konstant zu halten.

Während der Hydraulikmotor 30 mit dem voreingestellten Schwenkwinkel SW betrieben wird, wird die Drehzahl der Kuppeleinrichtung 33 durch die Ansteuerung der Hydraulikpumpe 34 bewirkt. Die Drehzahl der Kuppeleinrichtung 33 kann in den technischen Grenzen unabhängig von der Antriebsmotordrehzahl und der Vorfahrtgeschwindigkeit im Wesentlichen konstant gehalten werden. Wesentlich ist dabei, dass durch diese Ansteuerung einer Motordrückung des als Verbrennungsmotor ausgeführten Antriebsmotors 9 entgegengewirkt werden kann, um die Drehzahl der Kuppeleinrichtung 33 im Wesentlichen konstant zu halten. Dadurch kann der Betrieb von Vorsatzgeräten 4 mit angetriebenen Komponenten, die mit einer konstanten Drehzahl zu betreiben sind, gewährleistet werden.

Hierdurch lässt sich beispielsweise bei einem Direktschneidwerk durch eine im Wesentlichen konstant gehaltene Mähscheibendrehzahl das Schnittbild verbessern. Durch die elektrische Steuerung des Schwenkwinkels SW des Hydraulikmotors 30 wirkt die hydrostatische Übersetzung zwischen der Hydraulikpumpe 34 und dem Hydraulikmotor 30 der Motordrückung entgegen um die Drehzahl der Kuppeleinrichtung 33 im Wesentlichen konstant zu halten.

**Bezugszeichenliste**

| | | | |
|---|---|---|---|
| 1 | Erntemaschine | 27 | Hauptantriebsstrang |
| 2 | Feldhäcksler | 28 | Antriebsstrang |
| 3 | Erntegutstrom | 29 | Vorsatzantrieb |
| 4 | Vorsatzgerät | 30 | Hydraulikmotor |
| 5 | Einzugsvorrichtung | 31 | Getriebe |
| 5a | Walze | 32 | Gelenkwelle |
| 5b | Walze | 33 | Kuppeleinrichtung |
| 5c | Einzugsgehäuse | 34 | Hydraulikpumpe |
| 6 | Häckselvorrichtung | 35 | Steuerungsvorrichtung |
| 6a | Messertrommel | 36 | Hydraulikreislauf |
| 6b | Messertrommelwelle | 37 | Hydraulikleitung |
| 7 | Konditioniereinrichtung | 38 | Druckbegrenzungsventil |
| 8 | Auswurfbeschleuniger | 39 | Drucksensor |
| 8a | Förderelement | 40 | Recheneinheit |
| 8b | Welle | 41 | Speichereinheit |
| 9 | Antriebsmotor | 42 | Bedien- und Anzeigeeinheit |
| 10 | Überladeeinrichtung | 43 | Grenz-Drehmomentverlauf von 30 |
| 11 | Verteilergetriebe | 44 | Drehmomentverlauf von 4 |
| 12 | Abtriebsriemenscheibe | 45 | Effizienz-Drehmomentverlauf |
| 13 | Kupplung | 46 | Schraffur |
| 14 | Hydraulikpumpe | 47 | Schraffur |
| 15 | Hauptantriebsriemen | | |
| 16 | Hauptriemenscheibe | FR | Fahrtrichtung |
| 17 | Riemenscheibe | SW | Schwenkwinkel von 30 |
| 18 | Spannvorrichtung | | |
| 19 | Spannrolle | | |
| 20 | Achse | | |
| 21 | Hydraulikzylinder | | |
| 22 | Hydraulikmotor | | |
| 23 | Getriebe | | |
| 24 | Gelenkwelle | | |
| 25 | Getriebe | | |
| 26 | Antriebssystems | | |

## Patentansprüche

1. Selbstfahrende Erntemaschine (1, 2), umfassend einen Antriebsmotor (9) sowie einen Vorsatzantrieb (29), welcher zumindest einen Hydraulikmotor (30), der als Verstellmotor ausgebildet ist und eine Hydraulikpumpe (34) aufweist, die zum Antreiben des Hydraulikmotors (30) zum Antreiben eines an einer Einzugsvorrichtung (5) der Erntemaschine (1, 2) angeordneten Vorsatzgerätes (4) eingerichtet ist, wobei die Erntemaschine (1, 2) eine Steuerungsvorrichtung (35) zur Ansteuerung des Vorsatzantriebes (29) umfasst, wobei die Steuerungsvorrichtung (35) dazu eingerichtet ist, den Hydraulikmotor (30) in Abhängigkeit von einem in der Steuerungsvorrichtung (35) hinterlegten vorsatzgerätespezifischen Parametersatz anzusteuern, so dass der Hydraulikmotor (30) ein vorsatzgerätespezifisches Betriebsdrehmoment generiert, welches geringer als ein für das anzutreibende Vorsatzgerät (4) spezifisches Maximaldrehmoment ist, und dass die Steuerungsvorrichtung (35) dazu eingerichtet ist, beim Detektieren einer Lastspitze den Hydraulikmotor (30) anzusteuern, um durch eine Änderung eines voreingestellten Schwenkwinkels (SW) das vom Hydraulikmotor (30) generierte Betriebsdrehmoment bis zum vorsatzgerätespezifischen Maximaldrehmoment zu erhöhen, wobei die Hydraulikpumpe (34) und der Hydraulikmotor (30) in einem geschlossen ausgeführten Hydraulikkreislauf (36) angeordnet sind, wobei die Hydraulikpumpe (34) und der Hydraulikmotor (30) durch zwei Hydraulikleitungen (37) fluidleitend miteinander verbunden sind, wobei dass in beiden Hydraulikleitungen (37) jeweils ein Drucksensor (39) der Hydraulikpumpe (34) nachgeordnet ist, welche von diesen generierte Messsignale an die Steuerungsvorrichtung (35) zur Auswertung übertragen.

2. Selbstfahrende Erntemaschine (1, 2) nach Anspruch 1, **dadurch gekennzeichnet, dass** die Steuerungsvorrichtung (35) dazu eingerichtet ist, den Hydraulikmotor (30) in einem Effizienzmodus zu betreiben, wobei die Steuerungsvorrichtung (35) den im Effizienzmodus voreingestellten Schwenkwinkel (SW) des Hydraulikmotors (30) nach einem Lastkollektiv in Abhängigkeit von der Art des angebauten Vorsatzgerätes (4) und einer für das Vorsatzgerät (4) spezifischen Betriebsdrehzahl bestimmt.

3. Selbstfahrende Erntemaschine (1, 2) nach Anspruch 1, **dadurch gekennzeichnet, dass** in beiden Hydraulikleitungen (37) jeweils ein Druckbegrenzungsventil (38) der Hydraulikpumpe (34) nachgeordnet ist, wobei die beiden Druckbegrenzungsventile (38) baugleich ausgeführt sind.

4. Selbstfahrende Erntemaschine (1, 2) nach einem der Ansprüche 1 bis 3, **dadurch gekennzeichnet, dass** die Steuerungsvorrichtung (35) eine Recheneinheit (40), eine Speichereinheit (41) sowie eine Bedien- und Anzeigeeinheit (42) umfasst, wobei die Recheneinheit (40) dazu eingerichtet ist, in der Speichereinheit (41) hinterlegte Informationen zu verarbeiten.

5. Selbstfahrende Erntemaschine (1, 2) nach Anspruch 4, **dadurch gekennzeichnet, dass** in der Speichereinheit (41) vorsatzgerätespezifisch zumindest ein Minimalwert und zumindest ein Maximalwert für einen im Hydraulikkreislauf (36) detektieren Lastdruck hinterlegt ist.

6. Selbstfahrende Erntemaschine (1, 2) nach Anspruch 5, **dadurch gekennzeichnet, dass** die Steuerungsvorrichtung (35) dazu eingerichtet ist, beim Überschreiten des Maximalwertes für den Lastdruck ein von dem Hydraulikmotor (30) aufgenommenes Schluckvolumen durch die Verstellung des voreingestellten Schwenkwinkels (SW) zu vergrößern.

7. Selbstfahrende Erntemaschine (1, 2) nach Anspruch 6, **dadurch gekennzeichnet, dass** die Steuerungsvorrichtung (35) dazu eingerichtet ist, beim Unterschreiten des Minimalwertes für den Lastdruck das von dem Hydraulikmotor (30) aufgenommene Schluckvolumen durch die Verstellung des Schwenkwinkels (SW) zu reduzieren, so dass der Hydraulikmotor (30) das für die Betriebsart Effizienzmodus voreingestellte vorsatzgerätespezifische Betriebsdrehmoment generiert.

8. Selbstfahrende Erntemaschine (1, 2) nach Anspruch 6 oder 7, **dadurch gekennzeichnet, dass** die Steuerungsvorrichtung (35) dazu eingerichtet ist, in Abhängigkeit von einer Mindestdauer der Überschreitung des Maximalwertes oder der Unterschreitung des Minimalwertes den Hydraulikmotor (30) zur Veränderung des aufgenommenen Schluckvolumens anzusteuern.

9. Selbstfahrende Erntemaschine (1, 2) nach einem der Ansprüche 4 bis 8, **dadurch gekennzeichnet, dass** die Steuerungsvorrichtung (35) das vorsatzgerätespezifische Betriebsdrehmoment mittels in der Speichereinheit (41) hinterlegten Kennlinien (43, 44, 45) bestimmt.

10. Selbstfahrende Erntemaschine (1, 2) nach einem der vorangehenden Ansprüche, **dadurch gekennzeichnet, dass** die Steuerungsvorrichtung (35) dazu eingerichtet ist, zum Betreiben des Vorsatzgerätes (4) eine vom Hydraulikmotor (30) angetriebene, als Schnellkuppeleinrichtung ausgeführte Kuppeleinrichtung (33), mit der das Vorsatzgerät (4) zum Antreiben trieblich verbunden ist, mit einer konstanten Drehzahl zu betreiben und die Drehzahl der Kuppelvorrichtung (33) durch eine von der Antriebsdrehzahl des Antriebsmotors (9) und der Vorfahrtgeschwindigkeit unabhängigen Ansteuerung der Hydraulikpumpe (34) des Vorsatzantriebs (29) im Wesentlichen konstant zu halten.

## Claims

1. Self-propelled harvester (1, 2), comprising a drive motor (9) and an attachment drive (29), which comprises at least one hydraulic motor (30) which is designed as an adjusting motor and has a hydraulic pump (34) which is configured to drive the hydraulic motor (30) for driving an attachment (4) arranged on a feeding device (5) of the harvester (1, 2), wherein the harvester (1, 2) comprises a control device (35) for activating the attachment drive (29), wherein the control device (35) is configured to activate the hydraulic motor (30) as a function of an attachment-specific parameter set stored in the control device (35), so that the hydraulic motor (30) generates an attachment-specific operating torque, which is lower than a maximum torque specific to the attachment (4) to be driven, and wherein the control device (35) is configured to activate the hydraulic motor (30) when a load peak is detected in order to increase the operating torque generated by the hydraulic motor (30) by changing a preset pivot angle (SW) up to the attachment-specific maximum torque, wherein the hydraulic pump (34) and the hydraulic motor (30) are arranged in a closed hydraulic circuit (36), wherein the hydraulic pump (34) and the hydraulic motor (30) are fluidically conductively connected to each other by two hydraulic lines (37), wherein a pressure sensor (39) is arranged downstream of the hydraulic pump (34) in each of the two hydraulic lines (37), which pressure sensors transmit measurement signals generated by them to the control device (35) for evaluation.

2. Self-propelled harvester (1, 2) according to Claim 1, **characterized in that** the control device (35) is configured to operate the hydraulic motor (30) in an efficiency mode, wherein the control device (35) determines the pivot angle (SW) of the hydraulic motor (30) preset in efficiency mode according to a load collective as a function of the type of attachment (4) fitted and an operating speed specific to the attachment (4).

3. Self-propelled harvester (1, 2) according to Claim 1, **characterized in that** a pressure limiting valve (38) is arranged downstream of the hydraulic pump (34) in each of the two hydraulic lines (37), wherein the two pressure limiting valves (38) are of identical design.

4. Self-propelled harvester (1, 2) according to any of Claims 1 to 3, **characterized in that** the control device (35) comprises a computing unit (40), a memory unit (41) and an operator control and display unit (42), wherein the computing unit (40) is configured to process information stored in the memory unit (41).

5. Self-propelled harvester (1, 2) according to Claim 4, **characterized in that** at least a minimum value and at least a maximum value for a load pressure detected in the hydraulic circuit (36) are stored in the memory unit (41) in a manner specific to the attachment.

6. Self-propelled harvester (1, 2) according to Claim 5, **characterized in that** the control device (35) is configured, when the maximum value for the load pressure is exceeded, to increase an intake volume received by the hydraulic motor (30) by adjusting the preset pivot angle (SW).

7. Self-propelled harvester (1, 2) according to Claim 6, **characterized in that** the control device (35) is configured, when the minimum value for the load pressure is undershot, to reduce the intake volume received by the hydraulic motor (30) by adjusting the pivot angle (SW), so that the hydraulic motor (30) generates the attachment-specific operating torque preset for the efficiency mode.

8. Self-propelled harvester (1, 2) according to Claim 6 or 7, **characterized in that** the control device (35) is configured to activate the hydraulic motor (30) for changing the received intake volume as a function of a minimum duration of the maximum value being exceeded or the minimum value being undershot.

9. Self-propelled harvester (1, 2) according to any of Claims 4 to 8, **characterized in that** the control device (35) determines the attachment-specific operating torque by means of characteristic curves (43, 44, 45) stored in the memory unit (41).

10. Self-propelled harvester (1, 2) according to any of the preceding claims, **characterized in that** the control device (35) is configured, for operating the attachment (4), to operate a coupling device (33), which is driven by the hydraulic motor (30), designed as a quick-coupling device and to which the attachment (4) is drive-connected for driving purposes, at a constant speed and to keep the speed of the coupling device (33) substantially constant by activating the hydraulic pump (34) of the attachment drive (29) independently of the drive speed of the drive motor (9) and the forward speed.

## Revendications

1. Moissonneuse automotrice (1, 2) comprenant un moteur d'entraînement (9) ainsi qu'un entraînement d'accessoire (29), qui comporte au moins un moteur hydraulique (30) formé comme un moteur à cylindrée variable et une pompe hydraulique (34) mise au point pour entraîner le moteur hydraulique (30) pour entraîner un appareil accessoire (4) disposé sur un dispositif d'insertion (5) de la moissonneuse (1, 2), la moissonneuse (1, 2) comprenant un dispositif de commande (35) pour piloter l'entraînement d'accessoire (29), le dispositif de commande (35) étant mise au point pour piloter le moteur hydraulique (30) en fonction d'un ensemble de paramètres spécifiques à l'appareil accessoire mémorisé dans le dispositif de commande (35), de telle sorte que le moteur hydraulique (30) génère un couple de rotation de fonctionnement spécifique à l'appareil accessoire, qui est inférieur à un couple de rotation maximal spécifique à l'appareil accessoire (4) à entraîner, et le dispositif de commande (35) étant mis au point pour piloter le moteur hydraulique (30) lorsqu'une pointe de charge est détectée pour augmenter le couple de rotation de fonctionnement généré par le moteur hydraulique (30) jusqu'au couple de rotation maximal spécifique à l'appareil accessoire en modifiant un angle de pivotement (SW) préréglé, la pompe hydraulique (34) et le moteur hydraulique (30) étant disposés dans un circuit hydraulique (36) fermé, la pompe hydraulique (34) et le moteur hydraulique (30) étant reliés l'un à l'autre de manière à acheminer un fluide par deux conduites hydrauliques (37), un capteur de pression (39) étant disposé en aval de la pompe hydraulique (34) dans les deux conduites hydrauliques (37), qui transmettent des signaux de mesure générés par ceux-ci au dispositif de commande (35) pour évaluation.

2. Moissonneuse automotrice (1, 2) selon la revendication 1, **caractérisée en ce que** le dispositif de commande (35) est mis au point pour faire fonctionner le moteur hydraulique (30) dans un mode d'efficacité, le dispositif de commande (35) déterminant l'angle de pivotement (SW) du moteur hydraulique (30) préréglé dans le mode d'efficacité selon un groupe de charges en fonction du type de l'appareil accessoire (4) fixé et d'une vitesse de rotation de fonctionnement spécifique à l'appareil accessoire (4).

3. Moissonneuse automotrice (1, 2) selon la revendication 1, **caractérisée en ce qu'**une soupape de limitation de pression (38) est disposée en aval de la pompe hydraulique (34) dans les deux conduites hydrauliques (37), les deux soupapes de limitation de pression (38) étant de conception identique.

4. Moissonneuse automotrice (1, 2) selon l'une des revendications 1 à 3, **caractérisée en ce que** le dispositif de commande (35) comprend une unité de calcul (40), une unité de stockage (41) et une unité de commande et d'affichage (42), l'unité de calcul (40) étant mise au point pour traiter des informations enregistrées dans l'unité de stockage (41).

5. Moissonneuse automotrice (1, 2) selon la revendication 4, **caractérisée en ce qu'**au moins une valeur minimale et au moins une valeur maximale pour une pression de charge détectée dans le circuit hydraulique (36) sont enregistrées dans l'unité de stockage (41) de manière spécifique à l'appareil accessoire.

6. Moissonneuse automotrice (1, 2) selon la revendication 5, **caractérisée en ce que** le dispositif de commande (35) est mis au point pour augmenter un volume d'absorption absorbé par le moteur hydraulique (30) en cas de dépassement de la valeur maximale de la pression de charge par le réglage de l'angle de pivotement (SW) préréglé.

7. Moissonneuse automotrice (1, 2) selon la revendication 6, **caractérisée en ce que** le dispositif de commande (35) est mis au point pour, lorsque la valeur minimale de la pression de charge est inférieure, réduire le volume d'absorption absorbé par le moteur hydraulique (30) en ajustant l'angle de pivotement (SW), de telle sorte que le moteur hydraulique (30) génère le couple de rotation de fonctionnement spécifique à l'appareil accessoire prédéfini pour le mode de fonctionnement mode d'efficacité.

8. Moissonneuse automotrice (1, 2) selon la revendication 6 ou 7, **caractérisée en ce que** le dispositif de commande (35) est mis au point pour piloter le moteur hydraulique (30) pour modifier le volume d'absorption absorbé en fonction d'une durée minimale du dépassement de la valeur maximale ou du non-dépassement de la valeur minimale.

9. Moissonneuse automotrice (1, 2) selon l'une des revendications 4 à 8, **caractérisée en ce que** le dispositif de commande (35) détermine le couple de rotation de fonctionnement spécifique à l'appareil accessoire au moyen de courbes caractéristiques (43, 44, 45) enregistrées dans l'unité de stockage (41).

10. Moissonneuse automotrice (1, 2) selon l'une des revendications précédentes, **caractérisée en ce que** le dispositif de commande (35) est mis au point pour faire fonctionner à une vitesse de rotation constante un système d'accouplement (33) entraîné par le moteur hydraulique (30), réalisé sous la forme d'un système d'accouplement rapide, auquel l'appareil accessoire (4) est relié en entraînement pour l'entraînement, pour le fonctionnement de l'appareil accessoire (4) et pour maintenir la vitesse de rotation du dispositif d'accouplement (33) sensiblement constante par un pilotage de la pompe hydraulique (34) de l'entraînement d'accessoire (29) indépendamment de la vitesse de rotation d'entraînement du moteur d'entraînement (9) et de la vitesse de marche avant.
